# EUROPÄISCHE PATENTSCHRIFT

(11) **EP 2 200 897 B1**
(45) Veröffentlichungstag und Bekanntmachung des Hinweises auf die Patenterteilung: **11.11.2015**
(21) Anmeldenummer: 08760891.5
(22) Anmeldetag: 12.06.2008
(51) Int. Cl.: B64C 1/00, B64C 1/06, B64F 5/00

(54) **VERFAHREN ZUR HERSTELLUNG EINER RUMPFZELLE EINES FLUGZEUGS**
METHOD FOR THE PRODUCTION OF A FUSELAGE AIRFRAME OF AN AIRCRAFT
PROCEDE DE REALISATION D'UNE CELLULE DE FUSELAGE D'UN AERONEF

(30) Priorität: 18.09.2007 DE 102007044387; 18.09.2007 US 994279 P
(43) Veröffentlichungstag der Anmeldung: 30.06.2010
(73) Patentinhaber: Airbus Operations GmbH, 21129 Hamburg (DE)
(72) Erfinder: STEPHAN, Andreas, 21684 Stade (DE)
(74) Vertreter: Isarpatent
(86) Internationale Anmeldenummer: PCT/EP2008/057345
(87) Internationale Veröffentlichungsnummer: WO 2009/037007

(56) Entgegenhaltungen:
- EP-A- 1 063 166
- WO-A-2007/057411
- DE-A1-102004 056 286
- GB-A- 2 326 863

## Beschreibung

Die Erfindung betrifft ein Verfahren zur Herstellung einer Rumpfzelle eines Flugzeugs, wobei mehrere hintereinander liegende Rumpfsektionen zusammengefügt werden.

Rumpfsektionen für Flugzeuge werden heutzutage vielfach noch in der bewährten Schalenbauweise unter Verwendung von Aluminiumlegierungsblechen hergestellt. Je nach Flugzeugtyp und dem erforderlichen Rumpfdurchmesser wird eine Rumpfsektion mit vier bis acht Schalensegmenten gebildet, die in der Regel durch Nieten zu einer kompletten Rumpfsektion zusammengefügt werden. Zur Bildung der vollständigen Rumpfzelle des Flugzeugs werden anschließend mehrere derart vorgefertigte Rumpfsektionen hintereinander ausgerichtet und endgültig zusammengefügt. Dokument WO 2007/057411 A1 offenbart ein solches typisches Herstellungsverfahren und stellt den nächstliegenden Stand der Technik dar. Bei der Herstellung der erforderlichen Längsnahtverbindungen zwischen den einzelnen Schalensegmenten während der Vorfertigung der Rumpfsektionen werden an zuvor definierten Positionen im Bereich der Querstöße die Längsnähte an einem Ende der Rumpfsektion über eine Länge, die im Allgemeinen mindestens einer Spantteilung entspricht, nicht ausgenietet.
Dieser nicht vollständig ausgenietete Abschnitt im Bereich des Endes der jeweiligen Längsnaht dient zum Toleranzausgleich beim Zusammenfügen der vorgefertigten Rumpfsektionen durch die Möglichkeit des geringfügigen Aufspreizens. Hierbei wird an ein starres Ende einer Rumpfsektion eine im Anfangsbereich noch "flexible" Rumpfsektion angefügt, wobei die Flexibilität durch die endseitig nicht vollständig ausgenieteten Längsnähte auf der anzufügenden Seite der Rumpfsektion erzielt wird.
Eine solche Toleranzausgleichsmöglichkeit ist notwendig, da die aneinander zufügenden Rumpfsektionen große räumliche Abmessungen haben und aufgrund unvermeidbarer Fertigungstoleranzen nur in Ausnahmefällen exakt denselben Durchmesser aufweisen.

Zunehmend sollen die Rumpfsektionen durch das Längsverschweißen von Schalensegmenten aus Aluminiumlegierungsmaterialien einstückig in Schälenbauweise hergestellt werden. Alternativ wird in Erwägung gezogen, die Rumpfsektionen mittels bekannter rechnergesteuerter Wickel- bzw. Ablageverfahren nahtlos mit faserverstärkten Kunststoffmaterialien (Verbundmaterial) zu fertigen. Bei diesen starren Rumpfsektionen entfällt jedoch die Möglichkeit zum Toleranzausgleich. Aus diesem Grund wird in beiden Fällen immer eine gewickelte Rumpfsektion bzw. eine starr verschweißte Rumpfsektion mit einer aus Schalensegmenten zusammengesetzten Rumpfsektion im Wechsel kombiniert.

Aufgabe der Erfindung ist es, die Vorteile der konventionellen Schalenbauweise mit denen der Fertigung von starren Rumpfsektionen, die entweder durch das Längsnahtverschweißen von Schalensegmenten aus Aluminium oder durch Wickel-bzw. Ablageverfahren mit Verbundmaterialien gebildet sind, zu verbinden.

Diese Aufgabe wird durch ein Verfahren mit den nachfolgenden Schritten des Patentanspruchs 1 gelöst:
a) Fertigung eines Außenhautsegments, wobei das Außenhautsegment unterseitig eine durchgehende Längsöffnung aufweist,
b) Aufspreizen des Außenhautsegments um mindestens ein Fußbodengerüst einzubringen,
c) Anfügen des Außenhautsegments an eine bereits vorhandene, starre Rumpfsektion unter Bildung einer Teilquernaht,
d) Positionieren einer vorgefertigten Unterschale in der Längsöffnung, um das Außenhautsegment umfangsseitig zu schließen,
e) Vervollständigung der Teilquernaht zur Quernaht und Zusammenfügen der Unterschale mit dem Außenhautsegment unter Bildung von mindestens zwei Längsnähten, und
f) Zusammenfügen des Fußbodengerüstes mit dem Außenhautsegment.

Durch die Fertigung einer Rumpfsektion mit einem nach unten hin zunächst noch offenen Außenhautsegment, das heißt einem Außenhautsegment mit einer durchlaufenden Längsöffnung, ist ein Toleranzausgleich möglich, wenn die Rumpfsektion an eine vorgefertigte, starre Rumpfsektion zur Bildung einer Rumpfzelle eines Flugzeugs angefügt werden soll. Zu diesem Zweck wird der Außenhautmantel im Anschlussbereich ausgehend von der durchgehenden Längsöffnung erforderlichenfalls soweit aufgespreizt oder zusammengedrückt, bis ein nahtloser Anschluss an die vorgefertigte, insbesondere hinsichtlich ihres Durchmessers starre Rumpfsektion möglich ist. Die Verbindung der Rumpfsektionen im Bereich der Quernaht untereinander erfolgt hierbei in bekannter Weise durch Quernahtverbindungslaschen.

Bei der bereits vorgefertigten Rumpfsektion kann es sich um eine mit mindestens zwei Schalensegmenten aus einem Aluminiumlegierungsmaterial unter Bildung von Längsnähten zusammengeschweißte oder um eine mit einem faserverstärkten Kunststoffmaterial einstückig gewickelte bzw. abgelegte Rumpfsektion handeln. Im Fall einer durch bekannte Wickel- und/oder Ablegeverfahren hergestellten Rumpfsektion kommen bevorzugt kohlefaserverstärkte Epoxidharze zum Einsatz. Das Zusammenschweißen der Aluminiumschalensegmente erfolgt bevorzugt mittels des Reibrührschweißprozesses, um eine hohe Längsnahtqualität zu erreichen, deren mechanische Eigenschaften mit denen des Vollmaterials vergleichbar sind. Alternativ kann die Rumpfsektion auch mit Blechen aus Glare^{®}, das heißt einem laminaren Schichtaufbau von abwechselnd vollflächig verklebten dünnen Aluminiumlegierungsblechen und glasfaserarmierten Kunststoffschichten gebildet sein. In diesem Fall erfolgt die Längsnahtbildung durch Nieten, Schrauben oder Kleben, um die thermische Belastung des Glares^{®} zu begrenzen. In Ausnahmefällen, wenn die Glare^{®}-Bleche mit speziellen Anschlussbereichen versehen sind, ist das direkte Fügen mittels thermischer Fügeverfahren und insbesondere mittels Reibrührschweißen möglich. Eine Kombination von konventionellen Aluminiumlegierungsblechen mit Glare^{®}-Blechen ist ohne weiteres möglich. Im Fall einer Kombination der Metallbauweise mit der CFK-Bauweise (Hybrid-Bauweise) ist ein besonderes Augenmerk auf Korrosionsprobleme im Kontaktbereich zwischen den Aluminiummaterialien und dem Verbundmaterial zu richten.

Das Anfügen einer weiteren Rumpfsektion an bereits bestehende Rumpfsektionen nach Maßgabe des erfindungsgemäßen Verfahrens erfolgt in mehreren Schritten.

Zunächst wird ein Außenhautsegment vorgefertigt, das an seiner Unterseite erfindungsgemäß eine durchgehende Längsöffnung aufweist. Eine Querschnittsfläche des Außenhautsegments bildet einen Teilkreis bzw. ein Bogensegment von etwa 280°.
Zum Einbringen eines Fußbodengerüstes oder anderer Ausstattungskomponenten (Stützstangen, Querträger etc.) wird das Außenhautsegment im Bereich der Längsöffnung soweit aufgespreizt, das sich das Fußbodengerüst in den Innenraum des Außenhautsegments einbringen lässt. Eine provisorische Lagefixierung des Fußbodengerüstes bis zur vollständigen Verbindung desselben mit dem Außenhautsegment erfolgt mit einer Vielzahl von Haltestangen, die im Deckenbereich des Außenhautsegments angelenkt sind.

Anschließend wird das Außenhautsegment an eine bereits vorgefertigte Rumpfsektion angefügt, was in der Regel durch das Aufschieben der anzufügenden Rumpfsektionen auf so genannte Querstoßlaschen geschieht, die an der vorgefertigten Rumpfsektion angeordnet sind. Das Anfügen des Außenhautsegments erfolgt stets ausgehend von der Oberseite beidseitig nach unten verlaufend unter Bildung einer Teilquernaht, um etwaige, sich infolge von Toleranzabweichungen ergebende "Aufwellungen bzw. Auffaltungen" des noch flexiblen Außenhautsegments sukzessiv nach unten zu beiden Seiten hin herauszuarbeiten bzw. heraus zu schieben. Die durchgehende Längsöffnung im Bereich des Außenhautsegments erlaubt hierbei den Toleranzausgleich durch geringfügiges Aufspreizen oder Zusammenpressen der beiden Schenkel des in diesem Stadium noch flexiblen Außenhautsegments. Im Anschluss daran wird eine bevorzugt komplett vorgefertigte Unterschale in der unterseitigen Längsöffnung des Außenhautsegments positioniert und ausgerichtet, wodurch das Außenhautsegment zu einer in sich umfangsseitig geschlossenen Außenhaut komplettiert wird. Die Unterschale ist zu diesem Zeitpunkt bereits mit sämtlichen Stringerprofilen und Ringspantsegmenten versehen.
Danach erfolgt die unterseitige Vervollständigung der Teilquernaht zu einer vollständigen umlaufenden Quernaht und das Zusammenfügen der Unterschale mit dem Außenhautsegment unter Bildung von mindestens zwei Längsnähten, wodurch das Außenhautsegment zu einer kompletten Rumpfsektion vervollständigt wird. Parallel oder nach der Beendigung dieses Vorgangs werden die innenseitigen Versteifungselemente, insbesondere in der Form von Stringern und Ringspantsegmenten, durch Stringerlaschen bzw. Spantkupplungen zusammengefügt. Alternativ können auch vollständige, bereits in sich geschlossene Ringspante durch die Längsöffnung eingeführt und innenseitig mit dem Außenhautsegment verbunden werden. Abschließend werden das Fußbodengerüst und gegebenenfalls Stützstangen zum Abfangen des Fußbodengerüsts mit dem Außenhautsegment zusammengefügt, und somit der endgültige Fußbodenquerträgeranschluss gebildet. Sämtliche Fügeprozesse werden in Abhängigkeit von den im konkreten Einzelfall zu fügenden Materialien durch Nieten, Schrauben, Kleben oder Schweißen, insbesondere durch Reibrührschweißen, ausgeführt.

Bevorzugt wird das längsgeschlitzte Außenhautsegment mit einem faserverstärkten Kunststoff, insbesondere mit einem kohlefaserverstärkten Epoxidharz in bekannter Wickeltechnik hergestellt. Hierbei erfolgt die Ablage des faserverstärkten Kunststoffmaterials auf einem Wickelkern, wobei die innenseitig angeordneten, in Längsrichtung verlaufenden Stringerprofile als integrale Bestandteile des Außenhautsegments bevorzugt im Zuge des Wickelprozesses mit gebildet werden. Die Aushärtung des gesamten Aufbaus erfolgt bevorzugt in nur einem Autoklavendurchlauf. Die zur Verstärkung erforderlichen Ringspante bzw. Ringspantsegmente werden nachträglich in einem separaten Fertigungsschritt in das Außenhautsegment eingebracht und mit der Innenseite des Außenhautsegments fest verbunden. Für den Fall, dass der Ringspant nicht einstückig ausgebildet ist, werden die Ringspantsegmente durch Spantkupplungen untereinander verbunden.
Die hier beschriebene offene Bauweise mit einer durchgehenden Längsöffnung erleichtert bei der Herstellung eines gewickelten Außenhautsegments - im Gegensatz zur Herstellung einer komplett geschlossenen Sektion im Wickelverfahren - in einem erheblichem Maße das Entfernen des Wickelkerns, wodurch die Herstellung längerer zylindrischer Sektionen im Wickelverfahren möglich wird.

Die Vorfertigung der Unterschale erfolgt im Fall der Verwendung von faserverstärkten Kunststoffen im Allgemeinen nicht durch das Wickelverfahren bzw. Ablegeverfahren, sondern durch die schichtweise Ablage des faserverstärkten Kunststoffmaterials auf einer entsprechend ausgebildeten im Wesentlichen horizontal angeordneten Form, wobei die Stringerprofile bevorzugt gleich mit gebildet werden. In einem weiteren Arbeitsschritt erfolgen das innenseitige Verbinden der Ringspantsegmente und die Integration von gegebenenfalls erforderlichen Querträgern mit der Innenseite der Außenhaut der Unterschale. Das Zusammenfügen der unterschiedlichen Komponenten kann wahlweise durch Nieten, Schrauben, Kleben oder eine beliebige Kombination hiervon erfolgen.

Alternativ kann das Außenhautteilsegment und/oder die in diesen einzusetzende Unterschale in der klassischen Aluminiumbauweise zum Beispiel mit Blechen aus Aluminiumlegierungen gebildet werden. In diesem Fall werden die Längsnähte zwischen den Schalensegmenten zur Schaffung des Außenhautsegments bevorzugt mittels des Reibrührschweißverfahrens hergestellt. Alternativ kann das Zusammenfügen auch durch Nieten, Schrauben, Kleben oder eine beliebige Kombination hiervon erfolgen. Die Integration der Stringerprofile und der Ringspantsegmente in die Schalensegmente bzw. Außenhaut der Unterschale erfolgt in bekannter Weise durch Nieten, Schweißen oder Kleben. Entsprechend werden gegebenenfalls erforderliche zusätzliche Querträger in die Unterschale eingefügt.
Für den Fall, dass das Außenhautsegment und/oder die Unterschale zumindest bereichsweise mit Glare^{®}-Blechen gebildet wird, kann das Zusammenfügen nur dann mittels bekannter Schweißverfahren erfolgen, wenn die Glare^{®}-Bleche über thermisch schweißbare Anschlussbereiche verfügten, um eine Beeinträchtigung des Lagenaufbaus im Glare^{®} durch die Hitzeeinwirkung und hierdurch bedingte Festigkeitsverluste zu vermeiden.

Weitere vorteilhafte Ausgestaltungen des Verfahrens sind in den weiteren Patentansprüchen dargelegt.

In der Zeichnung zeigt:
- **Fig. 1**: Eine schematisierte Querschnittsdarstellung eines mit einem faserverstärkten Kunststoff gebildeten, unten offenen Außenhautsegments auf einem Wickelkern,
- **Fig**. **2**: eine Querschnittsdarstellung einer insbesondere mit einem faserverstärkten Kunststoff gebildeten Außenhaut für eine Unterschale mit einer Form für deren Ablage,
- **Fig. 3**: eine Seitenansicht eines Außenhautsegments mit einem darin angeordneten Handhabungsgerät zur Bearbeitung,
- **Fig. 4**: eine Seitenansicht einer Unterschale und einem Handhabungsgerät zur Bearbeitung,
- **Fig. 5**: eine Seitenansicht eines Außenhautsegments mit abgehängtem Fußbodengerüst, Stützstangen sowie einer herangeführten Unterschale, und
- **Fig. 6**: eine Seitenansicht des Außenhautsegments gemäß der Fig. 5 mit der eingefügten Unterschale.

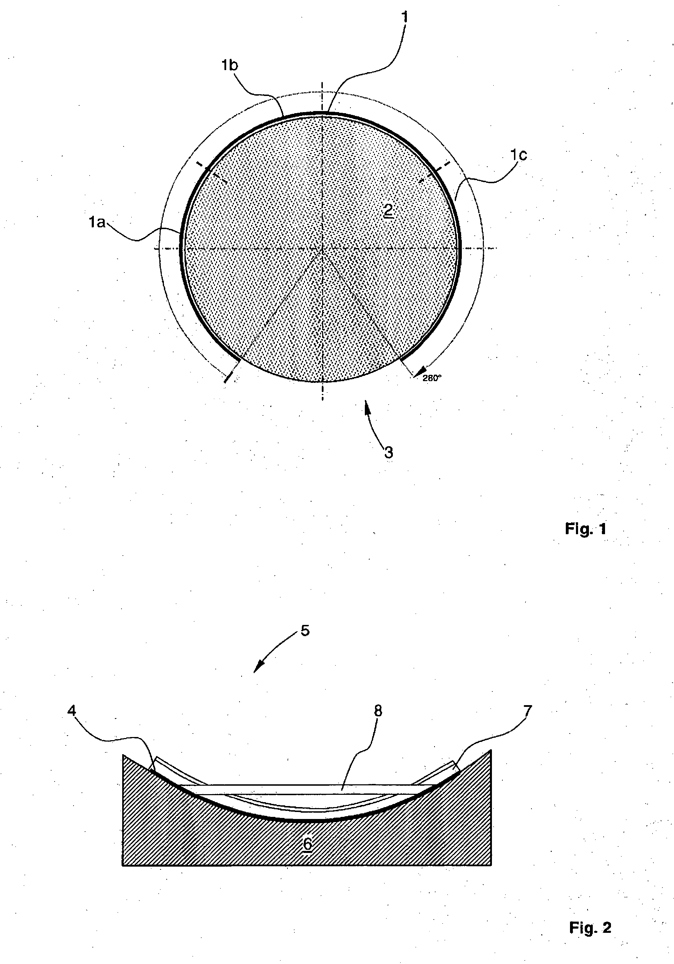

Die **Fig. 1** zeigt eine schematisierte Querschnittsdarstellung durch ein mit einem faserverstärkten Kunststoff gebildetes Außenhautsegment 1.
In einem ersten Verfahrensschritt wird das Außenhautsegment 1 zum Beispiel auf einem Wickelkern 2 durch bekannte Ablegeverfahren (Ablageverfahren) bzw. Wickelverfahren mit einem faserverstärkten Kunststoffmaterial, insbesondere mit einem kohlefaserverstärkten Epoxidharz, vorgefertigt. Im Zuge dieses Wickelprozesses werden die in der Fig. 1 nicht dargestellten Stringerprofile, die gleichfalls in Längsrichtung des Außenhautsegments 1, das heißt senkrecht zur Zeichenebene verlaufen, integral zum Außenhautsegment mit ausgebildet. Der Außenhautmantel 1 weist zum Toleranzausgleich unterseitig eine durchgehende, senkrecht zur Zeichenebene verlaufende Längsöffnung 3 (Längsschlitz) auf. Eine in der Darstellung der Fig. 1 nicht bezeichnete Querschnittsfläche des Außenhautsegments 1 bildet bevorzugt einen Teilkreis von etwa 280° bzw. weist einen Öffnungswinkel von 80° auf. Andere Öffnungswinkel sind gleichfalls möglich, solange das Fußbodengerüst und andere, in das Außenhautsegment 1 einzuführende Komponenten, durch Aufspreizen des Außenhautsegments 1 in dieses einbringbar sind.

Alternativ ist es gleichfalls möglich, das Außenhautsegment 1 mit zum Beispiel drei Schalensegmenten 1a, 1b, 1c, die mit Aluminiumlegierungsblechen oder mit Glare^{®}-Blechen oder einer Kombination hiervon gebildet sind, in klassischer Aluminiumbauweise herzustellen. In einer solchen Konstellation werden die Schalensegmente 1 a,1 b,1 c entlang von zwei Längsnähten, wie durch die beiden radial nach außen weisenden gestrichelten Linien angedeutet, bevorzugt durch Reibrührschweißen zusammengefügt, so dass gleichfalls eine in Bezug auf ihren Durchmesser im Wesentlichen "starre" Rumpfsektion entsteht. Anstelle einer 3er-Segmentierung kann das Außenhautsegment auch mit zwei, vier oder jeder anderen Anzahl von Schalensegmenten aufgebaut werden.

Die **Fig. 2** zeigt eine ebenfalls stark schematisierte Querschnittsdarstellung durch ein Außenhautsegment 4 einer vorzufertigenden Unterschale 5 in einem von einem Formwerkzeug 6 abgehobenen Zustand. Das Außenhautsegment 4 wird beispielsweise auf dem Formwerkzeug 6 durch schichtweises Ablegen eines faserverstärkten Kunststoffes, insbesondere eines kohlefaserverstärkten Epoxidharzes gebildet, wobei die nicht dargestellten Stringerprofile integral mit dem Außenhautsegment 4 ausgebildet werden. Anschließend erfolgt zum Beispiel die Aushärtung des gesamten Aufbaus in einem Autoklaven. In einem weiteren Verfahrensschritt erfolgt die Komplettierung der Unterschale 5 durch die Integration eines Ringspantsegments 7 und eines Querträgers 8 - die stellvertretend für die Übrigen mit einer Bezugsziffer versehen sind. Das Ringspantsegment 7 und der Querträger 8 werden bevorzugt mit demselben faserverstärkten Kunststoffmaterial gebildet, das auch für das Außenhautsegment Verwendung findet.

Grundsätzlich können die Außenhautsegmente 1,4, die Stringerprofile, die Ringspantsegmente sowie die Querträger mit Aluminiumlegierungen, Glare^{®}, einem faserverstärkten Kunststoff oder einer beliebigen Kombination dieser Materialien hergestellt werden. In Abhängigkeit der konkreten Materialkombination erfolgt dann das Zusammenfügen der Einzelkomponenten beispielsweise durch Nieten, Schrauben, Kleben, Schweißen oder eine Kombination der genannten Verfahren.

Die **Fig**. **3** zeigt eine Seitenansicht eines Außenhautsegments 9 mit einem darin angeordneten Werkzeug zur Weiterbearbeitung.
Ein an einer nicht dargestellten Haltevorrichtung in seiner Lage fixiertes Außenhautsegment 9 weist innenseitig einen Ringspant 10 sowie nicht dargestellte Stringerprofile auf. Durch eine Längsöffnung 11 ist ein Handhabungsgerät 12, insbesondere ein Standard-Knickarmroboter mit mindestens sechs Freiheitsgraden, mit einem Werkzeug 13 in das Außenhautsegment 9 einbringbar. Bei dem Werkzeug 13 kann es sich in Abhängigkeit von den eingesetzten Werkstoffen zum Beispiel um einen Bohrer, ein Nietwerkzeug, ein Schweißwerkzeug, eine Klebepistole oder eine beliebige Kombination hiervon handeln. Infolge der Längsöffnung 11 ist eine hervorragende innenseitige Zugänglichkeit des Außenhautsegments 9 für weitere Bearbeitungsschritte gegeben. Das Außenhautsegment 9 kann sowohl in der klassischen Aluminiumbauweise als auch in der bekannten Wickel- bzw. Ablagetechnik mit faserverstärkten Kunststoffen gebildet sein.

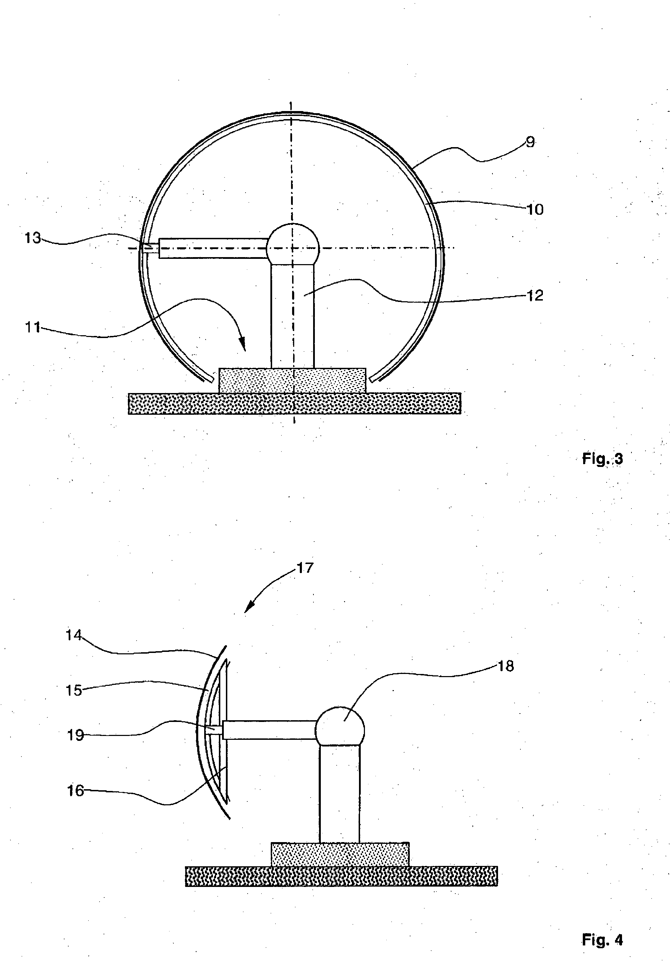

Die **Fig. 4** zeigt eine Seitenansicht eines Außenhautsegments 14, das mittels einer nicht dargestellten Haltevorrichtung zur Weiterbearbeitung in seiner Lage im Raum fixiert ist.
Das Außenhautsegment 14 umfasst ein Ringspantsegment 15 sowie einen Querträger 16 zur Bildung einer Unterschale 17. Weiterhin ist im Bereich einer Innenfläche des Außenhautsegments 14 eine Vielzahl von nicht dargestellten, senkrecht zur Zeichenebene verlaufenden Stringerprofilen angeordnet. Die Bearbeitung der Unterschale 17 erfolgt mittels eines Handhabungsgerätes 18 mit einem Werkzeug 19. Bei dem Werkzeug 19 kann es sich zum Beispiel um einen Bohrer, ein Nietwerkzeug, ein Schweißwerkzeug oder eine Klebepistole handeln. Das Werkzeug 19 kann über mehrere unterschiedliche Werkzeuge verfügen. Infolge der vertikalen Lagefixierung der Unterschale 17 ist eine ausgezeichnete innenseitige Zugänglichkeit der Unterschale 17 für die sich anschließenden automatischen oder händischen Bearbeitungsschritte gegeben.

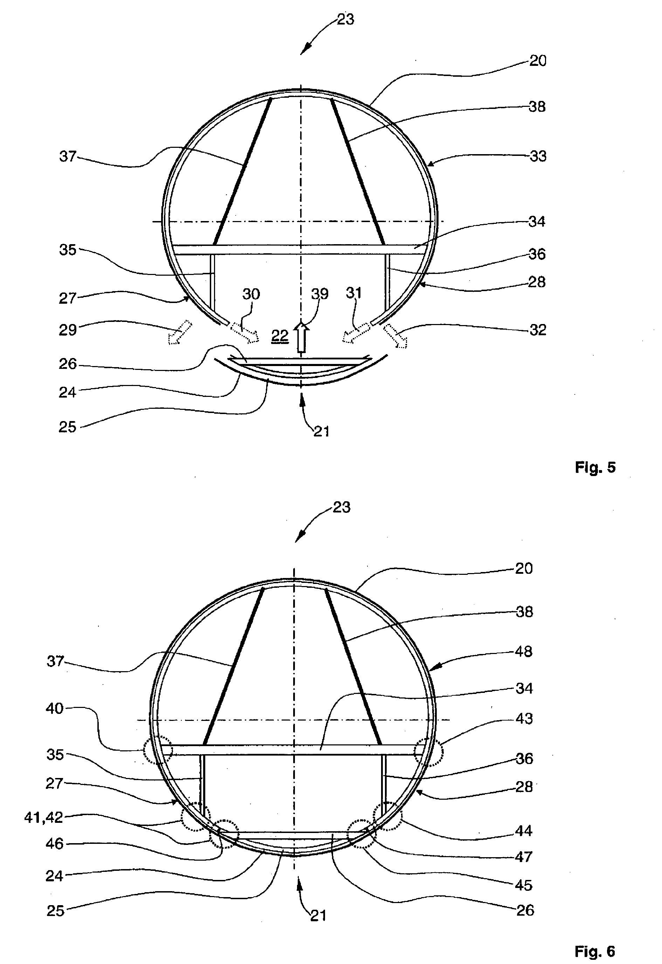

Im weiteren Verlauf der Beschreibung des Verfahrens wird auf die **Fig. 5,6** zugleich Bezug genommen.

In der Fig. 5 erfolgt die Komplettierung eines erfindungsgemäß längsgeschlitzt ausgebildeten Außenhautsegments 20 durch das unterseitige Einpassen einer vorgefertigten Unterschale 21 in eine Längsöffnung 22 des Außenhautsegments 20 zu einer Rumpfsektion 23. Die Unterschale 21 weist unter anderem ein Außenhautsegment 24 mit einem Umfangswinkel vom etwa 80°, ein Ringspantsegment 25 sowie einen Querträger 26 auf.
Dieser Komplettierungsschritt erfolgt jedoch erst dann, wenn das Außenhautsegment 20 bereits mit einer anderen vorgefertigten, in der Fig. 5 nicht dargestellten Rumpfsektion, unter Bildung einer Teilquernaht verbunden worden ist, um eine radiale Toleranzmöglichkeit durch das Aufspreizen oder Zusammenpressen der beiden Schenkel 27,28 in Richtung der Pfeile 29 bis 32 zu gewährleisten. Eine Teilquernaht 33 erstreckt sich hierbei über einen Umfangswinkel, der dem Umfangswinkel des Außenhautsegments 20 im Wesentlichen entspricht, also im gezeigten Ausführungsbeispiel über einen Umfangswinkel von etwa 280° (vgl. Fig. 1).
Vor dem Herstellen der Teilquernaht zwischen der Rumpfsektion 23 und einer weiteren, nicht eingezeichneten Rumpfsektion werden ein Fußbodengerüst 34 sowie die beiden Stützstangen 35,36 innerhalb des Außenhautsegments 20 vorfixiert. Darüber hinaus können weitere Komponenten das Außenhautsegment 20, wie zum Beispiel vollständige Ringspante, Ringspantsegmente, Längsversteifungen (Stringerprofile) sowie Leitungen aller Art (zum Beispiel Ver- und Entsorgungsleitungen, elektrische Leitungen, optischen Leitungen etc.) für eine erleichterte Montage durch die Längsöffnung 22 des Außenhautsegments 20 eingebracht werden. Die provisorische Lagefixierung des Fußbodengerüsts 34 bzw. der Stützstangen 35,36 erfolgt durch die deckenseitig im Außenhautsegment 20 angelenkten Haltestangen 37,38.

Die **Fig. 6** zeigt durch das Einfügen der Unterschale 21 in die Längsöffnung 22 des Außenhautsegments 20 die komplettierte Rumpfsektion 23 in Richtung des vertikalen Pfeils 39. In den Bereichen 40 bis 45, die durch die sechs punktiert dargestellten Kreise angedeutet sind, erfolgen die abschließenden Fügearbeiten zur Fertigstellung der Rumpfsektion 23. Insbesondere werden in den Bereichen 41,45 zwei Längsnähte 46,47 hergestellt, die bis zu einer umlaufenden, hinterseitigen Quernaht 48 bzw. der vervollständigten Teilquernaht 33 durchlaufen.

Die Fügenähte können in Abhängigkeit von den eingesetzten Werkstoffen beispielsweise durch Nieten, Schrauben, Reibrührschweißen, Kleben oder eine beliebige Kombination hiervon gebildet werden.

### Bezugszeichenliste

- 1: Außenhautsegment (280°-Oberschale)
- 1a: Schalensegment
- 1b: Schalensegment
- 1c: Schalensegment
- 2: Wickelkern
- 3: Längsöffnung
- 4: Außenhautsegment (Unterschale)
- 5: Unterschale
- 6: Formwerkzeug
- 7: Ringspantsegment
- 8: Querträger
- 9: Außenhautsegment
- 10: Ringspant
- 11: Längsöffnung
- 12: Handhabungsgerät
- 13: Werkzeug
- 14: Außenhautsegment
- 15: Ringspantsegment
- 16: Querträger
- 17: Unterschale
- 18: Handhabungsgerät
- 19: Werkzeug
- 20: Außenhautsegment (280°-Oberschale)
- 21: Unterschale
- 22: Längsöffnung
- 23: Rumpfsektion
- 24: Außenhautsegment (Unterschale)
- 25: Ringspantsegment
- 26: Querträger
- 27: Schenkel
- 28: Schenkel
- 29: Pfeil
- 30: Pfeil
- 31: Pfeil
- 32: Pfeil
- 33: Teilquernaht
- 34: Fußbodengerüst
- 35: Stützstange
- 36: Stützstange
- 37: Haltestange
- 38: Haltestange
- 39: Pfeil
- 40: Bereich
- 41: Bereich
- 42: Bereich
- 43: Bereich
- 44: Bereich
- 45: Bereich
- 46: Längsnaht
- 47: Längsnaht
- 48: Quernaht (vollständig umlaufend)

## Patentansprüche

1. Verfahren zur Herstellung einer Rumpfzelle eines Flugzeugs, wobei mehrere hintereinander liegende Rumpfsektionen zusammengefügt werden, umfassend die Schritte:
a) Fertigung eines Außenhautsegments (1,4,9,14,20) wobei das Außenhautsegment unterseitig eine durchgehende Längsöffnung (3,11,22) aufweist,
b) Aufspreizen des Außenhautsegments (1,4,9,14,20) um mindestens ein Fußbodengerüst (34) einzubringen,
c) Anfügen des Außenhautsegments (1,4,9,14,20) an eine bereits vorhandene, starre Rumpfsektion (23) unter Bildung einer Teilquernaht (33),
d) Positionieren einer vorgefertigten Unterschale (5,17,21) in der Längsöffnung (3,11,22), um das Außenhautsegment (1,4,9,14,20) umfangsseitig zu schließen,
e) Vervollständigung der Teilquernaht (33) zu einer Quernaht (48) und Zusammenfügen der Unterschale (5,17,21) mit dem Außenhautsegment (1,4,9,14,20) unter Bildung von mindestens zwei Längsnähten (46,47), und
f) Zusammenfügen des Fußbodengerüstes (34) mit dem Außenhautsegment (1,4,9,14,20).

2. Verfahren nach Patentanspruch 1, **dadurch gekennzeichnet, dass** weitere Rumpfsektionen zur Vervollständigung der Rumpfzelle angefügt werden.

3. Verfahren nach Patentanspruch 1 oder 2, **dadurch gekennzeichnet, dass** das mindestens eine Fußbodengerüst (34) zur Lagefixierung vor dem Zusammenfügen mit mindestens zwei Haltestangen (37,38) abgehängt wird.

4. Verfahren nach einem der Patentansprüche 1 bis 3, **dadurch gekennzeichnet, dass** das Außenhautsegment (1,4,9,14,20) in etwa einen Teilkreis von 280° bildet.

5. Verfahren nach einem der Patentansprüche 1 bis 4, **dadurch gekennzeichnet, dass** die Unterschale (5,17,21) innenseitig mit einer Vielzahl von Längsversteifungen, insbesondere mit einer Vielzahl von Stringerprofilen, und mit einer Vielzahl von Ringspantsegmenten (7,15,25) versehen wird.

6. Verfahren nach einem der Patentansprüche 1 bis 5, **dadurch gekennzeichnet, dass** die Unterschale (5,17,21) mit einem faserverstärkten Kunststoffmaterial, mit einem Aluminiumlegierungsmaterial, mit glasfaserverstärktem Aluminium (Glare^{®}) oder einer beliebigen Kombination hiervon gebildet wird.

7. Verfahren nach einem der Patentansprüche 1 bis 6, **dadurch gekennzeichnet, dass** die Quer- und Längsnähte (33,46,47,48) und das Zusammenfügen des mindestens einen Fußbodengerüstes (34) mit dem Außenhautsegment (1,4,9,14,20) durch Nieten, Schrauben, Kleben oder eine beliebige Kombination hiervon erfolgt.

8. Verfahren nach einem der Patentansprüche 1 bis 7, **dadurch gekennzeichnet, dass** das Außenhautsegment (1,4,9,14,20) mit einem faserverstärkten Kunststoffmaterial gebildet wird, wobei innenseitig eine Vielzahl von Längsversteifungen, insbesondere Stringerprofile, gebildet werden.

9. Verfahren nach Patentanspruch 8, **dadurch gekennzeichnet, dass** in das Außenhautsegment (1,4,9,14,20) innenseitig eine Vielzahl von Ringspantsegmenten (7,15,25) eingefügt wird.

10. Verfahren nach einem der Patentansprüche 1 bis 7, **dadurch gekennzeichnet, dass** das Außenhautsegment (1,4,9,14,20) mit mindestens zwei Schalensegmenten (1a, 1b, 1c) gebildet wird, wobei die Schalensegmente (1a, 1b, 1c) mit einem Aluminiumlegierungsmaterial und/oder mit glasfaserverstärktem Aluminium (Glare^{®}) gebildet werden, und die Schalensegmente (1a, 1b, 1c) entlang von mindestens einer Längsnaht verschweißt, insbesondere reibrührverschweißt, werden.

11. Verfahren nach Patentanspruch 10, **dadurch gekennzeichnet, dass** die mindestens zwei Schalensegmente innenseitig mit einer Vielzahl von Längsversteifungen, insbesondere mit einer Vielzahl von Stringerprofilen, und mit einer Vielzahl von Ringspantsegmenten (7,15,25) versehen werden.

## Claims

1. Method for manufacturing a fuselage cell of an aeroplane, a plurality of fuselage portions positioned in succession being joined together, comprising the steps of:
a) producing an outer skin segment (1, 4, 9, 14, 20), the outer skin segment comprising a continuous longitudinal opening (3, 11, 22) on the underside,
b) spreading the outer skin segment (1, 4, 9, 14, 20) so as to introduce at least one floor frame (34),
c) joining the outer skin segment (1, 4, 9, 14, 20) to a rigid fuselage portion (23) which is already present so as to form a partial transverse seam (33),
d) positioning a prefabricated lower shell (5, 17, 21) in the longitudinal opening (3, 11, 22) so as to close the outer skin segment (1, 4, 9, 14, 20) peripherally,
e) completing the partial transverse seam (33) to form a transverse seam (48) and joining together the lower shell (5, 17, 21) and the outer skin segment (1, 4, 9, 14, 20) so as to form at least two longitudinal seams (46, 47), and
f) assembling the floor frame (34) and the outer skin segment (1, 4, 9, 14, 20).

2. Method according to claim 1, **characterised in that** further fuselage portions are joined on to complete the fuselage cell.

3. Method according to either claim 1 or claim 2, **characterised in that** the at least one floor frame (34) is suspended, using at least two holding rods (37, 38), for positional fixing before being joined.

4. Method according to any of claims 1 to 3, **characterised in that** the outer skin segment (1, 4, 9, 14, 20) approximately forms a 280° circle sector.

5. Method according to any of claims 1 to 4, **characterised in that** the lower shell (5, 17, 21) is provided internally with a plurality of longitudinal reinforcements, in particular with a plurality of stringer profiles, and with a plurality of annular former segments (7, 15, 25).

6. Method according to any of claims 1 to 5, **characterised in that** the lower shell (5, 17, 21) is formed using a fibre-reinforced plastics material, using an aluminium alloy material, using glass-fibre-reinforced aluminium (Glare^{®}) or using any desired combination thereof.

7. Method according to any of claims 1 to 6, **characterised in that** the transverse and longitudinal seams (33, 46, 47, 48) and the joining together of the at least one floor frame (34) and the outer skin segment (1, 4, 9, 14, 20) are provided by riveting, screwing, gluing or any desired combination thereof.

8. Method according to any of claims 1 to 7, **characterised in that** the outer skin segment (1, 4, 9, 14, 20) is formed using a fibre-reinforced plastics material, a plurality of longitudinal reinforcements, in particular stringer profiles, being formed internally.

9. Method according to claim 8, **characterised in that** a plurality of annular former segments (7, 15, 25) are inserted into the outer skin segment (1, 4, 9, 14, 20) internally.

10. Method according to any of claims 1 to 7, **characterised in that** the outer skin segment (1, 4, 9, 14, 20) is formed using at least two shell segments (1a, 1b, 1c), the shell segments (1a, 1b, 1c) being formed using an aluminium alloy material and/or using glass-fibre-reinforced aluminium (Glare^{®}), and the shell segments (1a, 1b, 1c) being welded along at least one longitudinal seam, in particular friction stir welded.

11. Method according to claim 10, **characterised in that** the at least two shell segments are provided internally with a plurality of longitudinal reinforcements, in particular with a plurality of stringer profiles, and with a plurality of annular former segments (7, 15, 25).

## Revendications

1. Procédé de fabrication d'une cellule de fuselage d'un avion, dans lequel plusieurs sections de fuselage situées les unes derrière les autres sont assemblées, comprenant les étapes consistant à :
a) fabriquer un segment de peau extérieure (1, 4, 9, 14, 20), le segment de peau extérieure présentant sur la face inférieure une ouverture longitudinale continue (3, 11, 22),
b) déployer le segment de peau extérieure (1, 4, 9, 14, 20) pour introduire au moins un châssis de plancher (34),
c) rapporter le segment de peau extérieure (1, 4, 9, 14, 20) à une section de fuselage (23) rigide préexistante en formant un joint transversal partiel (33),
d) positionner une coque inférieure préfabriquée (5, 17, 21) dans l'ouverture longitudinale (3, 11, 22) pour refermer le segment de peau extérieure (1, 4, 9, 14, 20) sur la face périphérique,
e) compléter le joint transversal partiel (33) pour former un joint transversal (48) et assembler la coque inférieure (5, 17, 21) avec le segment de peau extérieure (1, 4, 9, 14, 20) en formant au moins deux joints longitudinaux (46, 47), et
f) assembler le châssis de plancher (34) avec le segment de peau extérieure (1, 4, 9, 14, 20).

2. Procédé selon la revendication 1, **caractérisé en ce que** d'autres sections de fuselage sont rapportées pour compléter la cellule de fuselage.

3. Procédé selon la revendication 1 ou 2, **caractérisé en ce que** l'au moins un châssis de plancher (34) est suspendu pour la fixation en position avant l'assemblage avec au moins deux barres de retenue (37, 38).

4. Procédé selon une des revendications 1 à 3, **caractérisé en ce que** le segment de peau extérieure (1, 4, 9, 14, 20) forme approximativement un secteur circulaire de 280°.

5. Procédé selon une des revendications 1 à 4, **caractérisé en ce que** la coque inférieure (5, 17, 21) est munie sur la face intérieure d'une pluralité de renforts longitudinaux, en particulier d'une pluralité de profilés de lisse, et d'une pluralité de segments de nervures annulaires (7, 15, 25).

6. Procédé selon une des revendications 1 à 5, **caractérisé en ce que** la coque inférieure (5, 17, 21) est formée d'un matériau plastique renforcé par des fibres, d'un matériau d'alliage d'aluminium, d'un aluminium renforcé par des fibres de verre (Glare®) ou d'une combinaison quelconque de ceux-ci.

7. Procédé selon une des revendications 1 à 6, **caractérisé en ce que** les joints transversaux et longitudinaux (33, 46, 47, 48) et l'assemblage de l'au moins un châssis de plancher (34) avec le segment de peau extérieure (1, 4, 9, 14, 20) sont réalisés par rivetage, vissage, collage ou une combinaison quelconque de ceux-ci.

8. Procédé selon une des revendications 1 à 7, **caractérisé en ce que** le segment de peau extérieure (1, 4, 9, 14, 20) est formé d'un matériau plastique renforcé par des fibres, dans lequel une pluralité de renforts longitudinaux, en particulier de profilés de lisse, est formée sur la face intérieure.

9. Procédé selon la revendication 8, **caractérisé en ce qu'**une pluralité de segments de nervures annulaires (7, 15, 25) est insérée sur la face intérieure dans le segment de peau extérieure (1, 4, 9, 14, 20).

10. Procédé selon une des revendications 1 à 7, **caractérisé en ce que** le segment de peau extérieure (1, 4, 9, 14, 20) est formé d'au moins deux segments de coque (1a, 1b, 1c), dans lequel les segments de coque (1a, 1b, 1c) sont formés d'un matériau d'alliage d'aluminium et/ou d'un aluminium renforcé par des fibres de verre (Glare®) et les segments de coque (1a, 1b, 1c) sont soudés le long d'au moins un joint longitudinal, en particulier soudés par friction-malaxage.

11. Procédé selon la revendication 10, **caractérisé en ce que** les au moins deux segments de coque sont munis sur la face intérieure d'une pluralité de renforts longitudinaux, en particulier d'une pluralité de profilés de lisse, et d'une pluralité de segments de nervures annulaires (7, 15, 25).
